# EUROPEAN PATENT APPLICATION

(11) **EP 3 296 521 A1**
(43) Date of publication of application: **21.03.2018**
(21) Application number: 17189763.0
(22) Date of filing: 07.09.2017
(51) Int. Cl.: F01D 11/20, F01D 11/14

(54) **CONTROLLING TURBINE SHROUD CLEARANCE FOR OPERATIONAL PROTECTION**

(30) Priority: 13.09.2016 US 201615264058
(71) Applicant: General Electric Company, Schenectady, NY 12345 (US)
(72) Inventor: MATHAI, George Vargese, Atlanta, GA Georgia 30339 (US); FISHER, William Theadore, Atlanta, GA Georgia 30339 (US); KLOSINSKI, Joseph Philip, Atlanta, GA Georgia 30339 (US); SCIPIO, Alston Ilford, Atlanta, GA Georgia 30339 (US)
(74) Representative: Foster, Christopher Michael

(57) **Abstract**

This disclosure provides systems (100, 300), methods, and storage medium (512) for storing code (520) related to controlling turbine shroud clearance for operational protection. The disclosure includes a multi-stage (1) turbine (200, 400, 502) and a protection system (120, 220, 320, 420, 530). The multi-stage turbine (200, 400, 502) includes a stage of airfoils with a distal shroud, a casing adjacent the distal shroud and defining a clearance distance between the distal shroud and the casing, and a clearance control mechanism (138, 238, 338, 438) that controllably adjusts the clearance distance based upon receiving a clearance control signal (224, 324, 424). The protection system (120, 220, 320, 420, 530) has an operational limit value related to a failure mode and provides the clearance control signal (224, 324, 424) to the clearance control mechanism (138, 238, 338, 438). The protection system (120, 220, 320, 420, 530) receives operational data related to the multi-stage turbine (200, 400, 502) and modifies the clearance control signal (224, 324, 424) based on the operational limit value to increase the clearance distance.

## Description

### BACKGROUND

The disclosure relates generally to turbomachines, and more particularly, to controlling turbine shroud clearances for operational protection, such as preventing compressor stall in a gas turbine.

Turbomachines, such as gas turbines, include one or more rows of airfoils, including stationary airfoils referred to as stator vanes and rotating airfoils referred to as rotor blades or buckets. A gas turbine may include an axial compressor at the front, one or more combustors around the middle, and a turbine at the rear. Typically, an axial compressor has a series of stages with each stage comprising a row of rotor blades followed by a row of stationary stator vanes. Accordingly, each stage generally comprises a pair of rotor blades and stator vanes. Typically, the rotor blades increase the kinetic energy of a fluid that enters the axial compressor through an inlet and the stator vanes convert the increased kinetic energy of the fluid into static pressure through diffusion. Accordingly, both sets of airfoils play a vital role in increasing the pressure of the fluid.

One issue in the operation of turbomachines is a phenomenon known as compressor stall. Compressor stall is a disruption of airflow through the turbomachine that can create a compressor surge or complete loss of compression, with potentially catastrophic results. In turbomachine operation, a limit may be defined to prevent the turbomachine from approaching a compressor surge, sometimes referred to as the compressor operability limit line (OLL), based on the speed-corrected airflow through the turbomachine and the compressor pressure ratio. As a turbomachine approaches or exceeds the compressor OLL, a conventional control system may reduce the fuel to the turbomachine in an effort bring operational parameters back below the compressor OLL.

### SUMMARY

A first aspect of this disclosure provides a system for controlling turbine shroud clearance for operational protection. The system comprises a multi-stage turbine and a protection system. The multi-stage turbine includes a stage of airfoils with a distal shroud, a casing adjacent the distal shroud and defining a clearance distance between the distal shroud and the casing, and a clearance control mechanism that controllably adjusts the clearance distance based upon receiving a clearance control signal. The protection system has an operational limit value related to a failure mode and provides the clearance control signal to the clearance control mechanism. The protection system receives operational data related to the multi-stage turbine and modifies the clearance control signal based on the operational limit value to increase the clearance distance to protect the system from the failure mode.

A second aspect of the disclosure provides a method for controlling turbine shroud clearance for operational protection. The method comprises controlling operation of a multi-stage turbine. The multi-stage turbine includes a stage of airfoils with a distal shroud, a casing adjacent the distal shroud and defining a clearance distance between the distal shroud and the casing; and a clearance control mechanism that controllably adjusts the clearance distance based upon receiving a clearance control signal. The method further comprises providing the clearance control signal to operate the multi-stage turbine with a first clearance distance during steady-state operation based on operational data related to the multi-stage turbine and an operational limit value related to a failure mode. The method still further comprises modifying the clearance control signal to operate the multi-stage turbine with a second clearance distance greater than the first clearance distance based on the operational limit value and a change in the operational data.

A third aspect of the disclosure provides a non-transitory computer readable storage medium storing code representative of a control system for a multi-stage turbine that controls turbine shroud clearance for operational protection. The multi-stage turbine includes a stage of airfoils with a distal shroud, a casing adjacent the distal shroud and defining a clearance distance between the distal shroud and the casing; and a clearance control mechanism that controllably adjusts the clearance distance based upon receiving a clearance control signal. The control system comprises a protection system with an operational limit value related to a failure mode and providing the clearance control signal to the clearance control mechanism. The protection system receives operational data related to the multi-stage turbine and modifies the clearance control signal based on the operational limit value to increase the clearance distance.

The illustrative aspects of the present disclosure are arranged to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a block diagram of an example co-generation system with shroud clearance control and compressor protection.
FIG. 2 shows a block diagram of an example gas turbine with shroud clearance control and compressor protection.
FIG. 3 shows a block diagram of another example co-generation system with shroud clearance control and compressor protection.
FIG. 4 shows a block diagram of another example gas turbine with shroud clearance control and compressor protection.
FIG. 5 shows a block diagram of a control system with shroud clearance control and compressor protection.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION

In some embodiments, aspects of the disclosure may be implemented through an existing control system for managing a gas turbine, other turbomachine, power generation facility, or portion thereof. They may be implemented for any gas turbine that includes an existing shroud clearance control mechanism or may be modified to include a shroud clearance control mechanism, such as a case temperature management blower or a mechanical, hydraulic, or pneumatic actuator for adjusting the spacing. In some embodiments, shroud clearance control mechanisms may include a feedback control loop and receive a clearance control signal to adjust shroud clearance to a desired distance. Clearance distance may be measured as the distance from a distal surface of an airfoil, including any attached distal shroud, to the nearest surface of the case, representing the narrowest choke point of fluid flow through the space between the distal surface of the airfoil and the case.

Aspects of the disclosure may be implemented with specific relation to stage 1 or the first stage along the flow path through a gas turbine. Gas turbine engines may operate in a choked flow at the exit of the stage 1 nozzle, as flow enters the stage 1 bucket. Choked flow means the flow velocity is at Mach 1 and velocity and mass flow cannot increase with that given geometry and pressure and temperature. So, this means that the compressor does not establish its own flow passing capability and pressure ratio, the pressure is determined by the choked flow point (Venturi principle). This pressure ratio may be reduced by hardware changes to the stage 1 nozzle that increase the throat area. This choked flow point is a function of the flow passing capability at the point of a convergent - divergent nozzle, which means it can be related to the stage 1 nozzle throat area (end of convergent area) as well as the clearances between the stage 1 bucket and stage 1 shroud (start of divergent area).

Aspects of the disclosure may augment gas turbine output and exhaust energy by enabling the gas turbine to back off an operating limit that might otherwise cause a trip condition that takes the unit offline, without suppressing fuel. Aspects of the disclosure may decrease performance in terms of energy output when engaged, but not to the degree that fuel suppression does. In some embodiments, fuel suppression will continue to be an option, but aspects of the disclosure may provide greater margin around the compressor operability limit line (OLL) before needing to engage fuel suppression and reduce fuel flow. Other actions for reducing compressor pressure ratios as they approach OLL may include controlling inlet bleed heat or inlet guide vanes. However, these actions are not available in many systems, and may be insufficient for addressing the issue. Aspects of the invention may provide protection from compressor OLL during certain ambient and load conditions and/or additional electrical power during certain ambient conditions, such as specific ambient temperature ranges.

Aspects of the disclosure may be advantageously applied to gas turbines operating with low BTU fuels, such as syngas, and/or cogeneration plants. By having an additional mechanism for OLL protection, generator output and exhaust energy into a combined or cogeneration cycle may be increased. Aspects of the disclosure may provide additional exhaust energy to heat recovery steam generators (HRSG) for cogeneration or export steam production during certain ambient conditions. In some embodiments, a gas turbine may find a steady state that engages shroud clearance adjustment to maintain operating levels below compressor OLL.

Aspects of the disclosure may include modified control logic for existing compressor OLL protection systems. This modified control logic may be applicable for all fuels and may have specific applicability for low BTU fuels on systems without inlet bleed heat control.

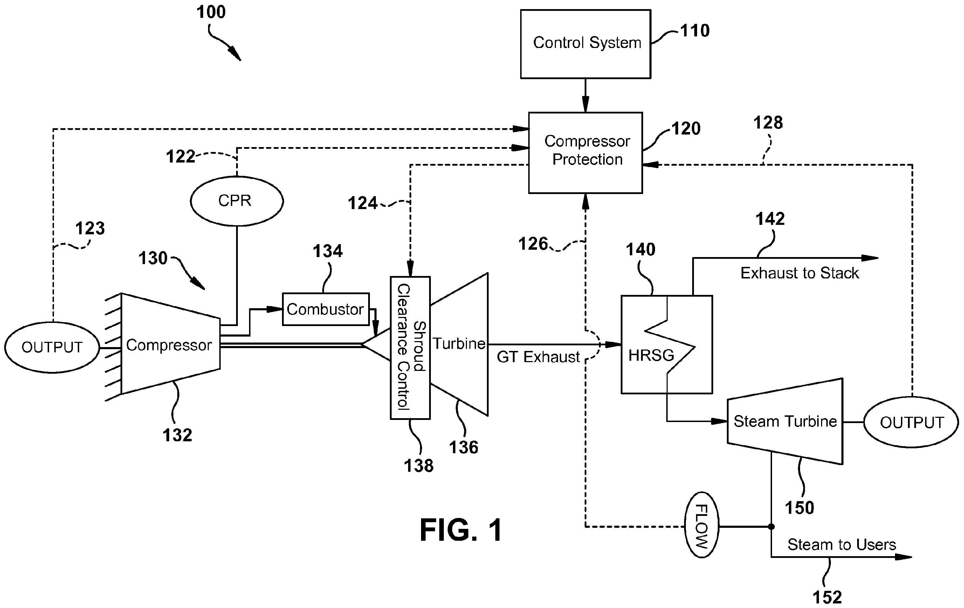

FIG. 1 shows an example cogeneration system 100 with shroud clearance control and compressor protection. A control system 110 manages operation of system 100 and may include or communicate with a variety of sensors, data channels, databases, process logic, and control systems for tracking operations and controlling various systems, subsystems, and components of system 100. For example, control system 110 may include a power plant control system for instrumentation, visualization, automation, and parameter and/or subsystem control during operation of a power plant, such as a cogeneration plant. In the example shown, control system 110 manages the operations of system 100, including gas turbine 130, heat recovery steam generator (HRSG) 140, and steam turbine 150. Control system 110 may include a plurality of communication channels for receiving data from sensors and/or localized control subsystems associated with each of the components of system 100, such as gas turbine 130, HRSG 140, and steam turbine 150.

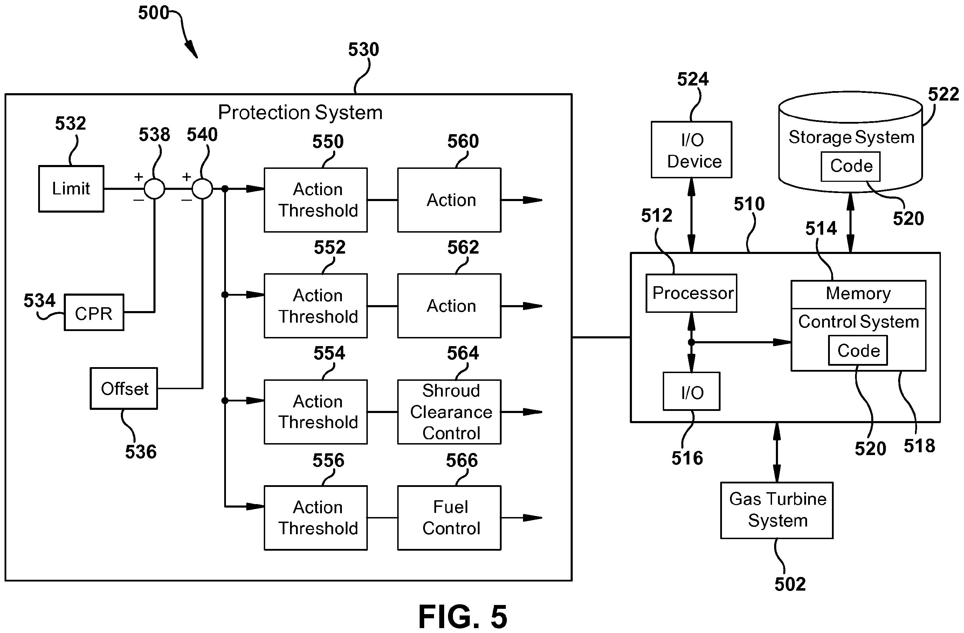

Control system 110 communicates with or includes a compressor protection system 120 that monitors a plurality of operating parameters and sensor output related to gas turbine 130 and related systems to prevent catastrophic failure of gas turbine 130. For example, compressor protection system 120 may trigger a trip condition when an operating limit line (OLL) value is reached or exceeded by a compressor pressure ratio (CPR) 122 signal to prevent a compressor stall failure mode. Compressor protection system 120 may further include one or more control outputs for changing the operating parameters of gas turbine 130 in response to CPR 122 reaching one or more threshold values related to the OLL in order to prevent the trip condition. For example, compressor protection system 120 may include a shroud clearance control signal 124 for controllably adjusting the shroud clearance of one or more stages in gas turbine 130. In some embodiments, compressor protection system 120 may include a plurality of control outputs for a sequence of preventative actions (modifications of operating parameters or conditions) that can be taken to address CPR 122 approaching the OLL. Such as protection system will be further described below with regard to FIG. 5. For example, compressor protection system 120 may include a fuel control signal, a bleed heat control signal, an inlet guide vane control signal, and/or similar control signals for modifying operation of gas turbine 130. In some embodiments, compressor protection system 120 may receive a plurality of values or signals for use in calculating and controlling operational changes in response to approaching the OLL. For example, compressor protection system 120 may receive a compressor output signal 123 from compressor 132, a flow value 126 from the output steam 152 of steam turbine 150, and an energy output value 128 from steam turbine 150. These values may provide additional context or input values for failure models, setting threshold values, response values or conditions, or calculating position along the OLL and resulting limit value for present operating conditions. Note that there may be a plurality of additional operating parameters, values, and sensor signals that are not used by compressor protection system 120, such as exhaust to stack 142, but may be used by other aspects of control system 110 or subsystem controls.

Gas turbine 130 may include any kind of conventional turbomachine including a compressor 132, combustor 134, and a turbine section 136. Turbine section 136 may include a plurality of stages, including a first stage along the fluid flow path through the turbine section 136. Gas turbine 130 may further comprise a shroud clearance control system 138. Shroud clearance control system 138 adjusts the shroud clearance in response to shroud clearance control signal 124. In one embodiment, shroud clearance control system 138 includes an actuator and a feedback loop for adjustably controlling the clearance distance between the maximum and minimum distances available based on the geometry and adjustment capabilities of the system. In some embodiments, shroud clearance control system 138 may be used to minimize the clearance distance to reduce fluid leak and increase system efficiency during steady-state operation of gas turbine 130.

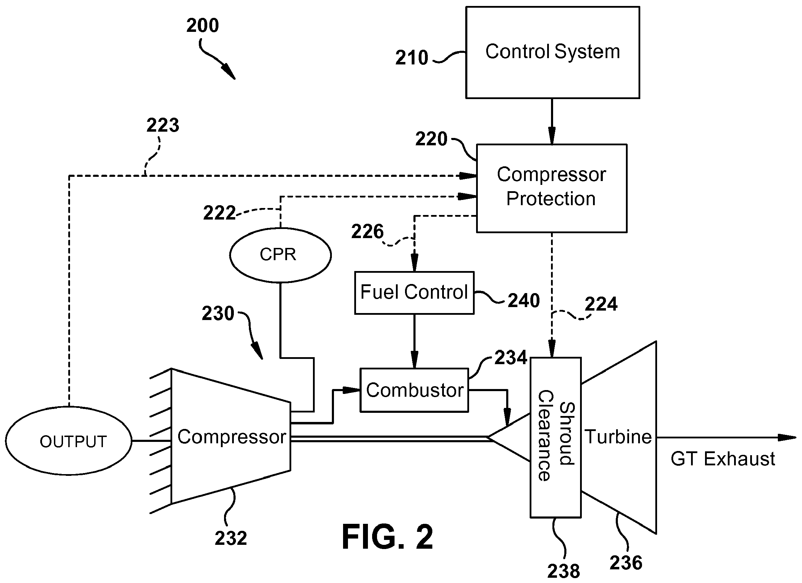

FIG. 2 shows an example gas turbine system 200 including a control system 210, a compressor protection system 220, and a gas turbine 230 operating independently of a larger cogeneration or similar facility. Gas turbine 230 includes a compressor 232, combustor 234, and turbine section 236, as well as shroud clearance control system 238 and fuel control system 240. As described above with regard to FIG. 1 and control system 110, control system 210 may be any manner of computer-based industrial control system for managing a single turbine, a cluster of turbines, or a larger energy production facility or network of facilities. Similarly, compressor protection system 220 may be in communication with or a component of control system 210. In the example shown, compressor protection system 220 receives a CPR signal 222 for monitoring the need for compressor protection based on a threshold value, such as OLL, for preventing a failure mode, such as compressor stall or a related trip condition. Compressor protection system 210 includes two operating control signals for modifying operation of gas turbine 230, shroud clearance control signal 224 and fuel control signal 226. In the example shown, compressor protection system 210 may include a plurality of threshold values that represent offsets from the OLL and determine conditions for triggering shroud clearance control signal 224 to modify (increase) the shroud clearance to decrease CPR 222 and fuel control signal 226 to modify (suppress) fuel delivery to decrease CPR 222. The threshold value for triggering modification of clearance control signal 224 may be less than the threshold value for triggering modification of the fuel control signal 226, such that clearance increase is attempted before attempting fuel suppression. In some embodiments, compressor protection system 220 may receive a plurality of values or signals for use in calculating and controlling operational changes in response to approaching the OLL. For example, compressor protection system 220 may receive a compressor output signal 223 from compressor 132 in addition to CPR 222.

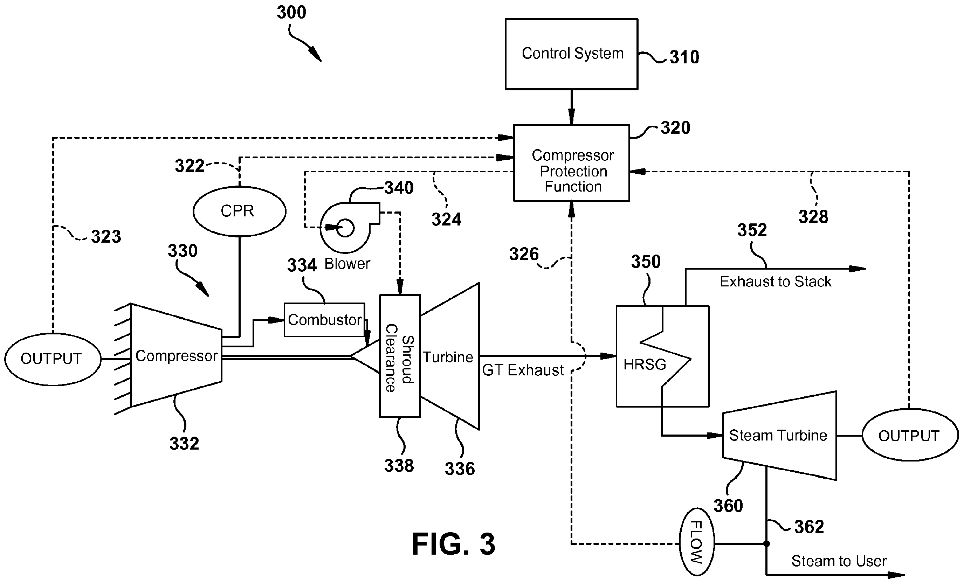

FIG. 3 is another example cogeneration system 300 with shroud clearance control and compressor protection, with a blower system used for clearance control. Cogeneration system 300 includes a control system 310, a compressor protection system 320, a gas turbine 330, an HRSG 350 with an exhaust output signal 352 and a steam turbine 360 with a steam output signal 362. Gas turbine 330 includes a compressor 332, combustor 334, and turbine section 336, as well as shroud clearance control system 338 and related blower system 340. Cogeneration system 300 may be described similarly to cogeneration system 100 in FIG. 1 above. Compressor protection system 320 receives a CPR signal 322, a compressor output signal 323, a steam flow signal 326, and an energy output signal 328 and generates a shroud clearance control signal 324. In the example shown, shroud clearance control signal 324 controls blower 340 to adjust shroud clearance control system 338. Shroud clearance control system 338 may include a feedback loop for achieving the desired clearance spacing based on operation of blower 340. The use of blower 340 may replace or supplement the use of an actuator for adjusting shroud clearance spacing.

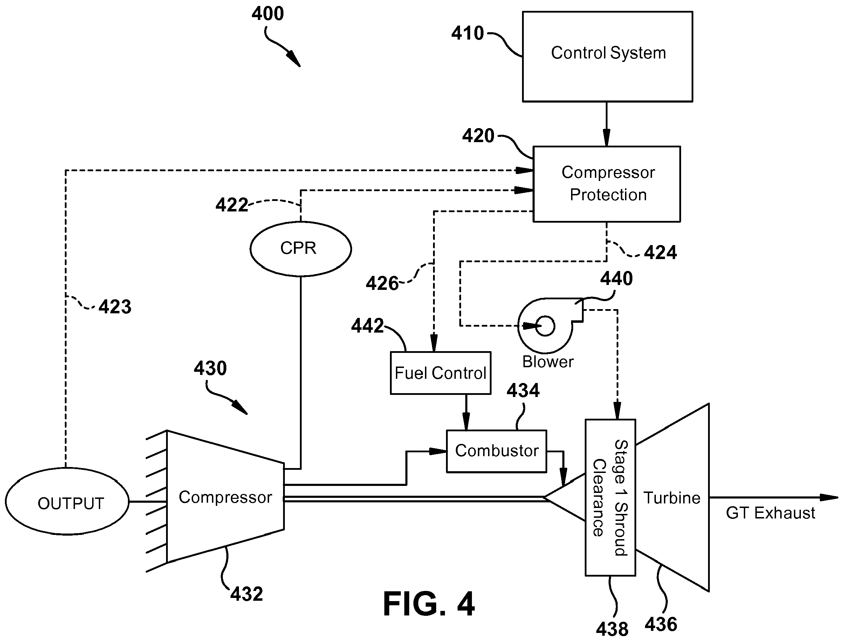

FIG 4 is another example gas turbine system 400 including a control system 410, a compressor protection system 420, and a gas turbine 430 operating independently of a larger cogeneration or similar facility. Gas turbine 430 includes a compressor 432, combustor 434, and turbine section 436, as well as shroud clearance control system 438, related blower system 440, and fuel control system 442. Gas turbine system 400 may be described similarly to gas turbine system 200 in FIG. 2 above. Compressor protection system 420 receives a CPR signal 422 and a compressor output signal 423 and generates a shroud clearance control signal 424 and a fuel control signal 426. In the example shown, shroud clearance control signal 424 controls blower 440 to adjust shroud clearance control system 438. Shroud clearance control system 438 may include a feedback loop for achieving the desired clearance spacing based on operation of blower 440. The use of blower 440 may replace or supplement the use of an actuator for adjusting shroud clearance spacing.

FIG. 5 shows an example control system 500 with shroud clearance control and compressor protection, such as may be used for control systems 110, 210, 310, 410 in FIGs. 1, 2, 3, and 4 above. Control system 500 may be in communication with a gas turbine system 502 through one or more communication and control interfaces to receive operating data and provide various control signals. For example, gas turbine system 502 may be a gas turbine such as those described above with regard to FIGs. 1-4 and include one or more interfaces for receiving CPR values and other operating values and providing shroud clearance control signals, fuel control signals, and/or other subsystem control signals. Control system 500 may comprise a variety of functions, data sources, modules, and/or applications for industrial control systems for monitoring, managing, and controlling gas turbine systems and related systems, operating environments, and facilities. In the example shown, control system 500 is embodied in computer program code 520 that is at least part of control system software 518 and additional detail is provided for a protection system 530 that may be embodied in computer program code 520.

Control system 500 is shown implemented on computer 510 using computer program code 520. To this extent, computer 510 is shown including a memory 514, a processor 512, an input/output (I/O) interface 516, and an interconnecting bus. Further, computer 510 is shown in communication with an external I/O device/resource 524 and a storage system 522. In general, processor 512 executes computer program code, such as protection system 530, that is stored in memory 514 and/or storage system 522 under instructions from code 520. While executing computer program code, processor 512 can read and/or write data to/from memory 514, storage system 522 and I/O device 524. The bus provides a communication link between each of the components in computer 510, and I/O device 524 can comprise any device that enables a user to interact with computer 510 (e.g., keyboard, pointing device, display, etc.). Computer 510 is only representative of various possible combinations of hardware and software. For example, processor 512 may comprise a single processing unit, or be distributed across one or more processing units in one or more locations, e.g., on a client and server. Similarly, memory 514 and/or storage system 522 may reside at one or more physical locations. Memory 514 and/or storage system 522 can comprise any combination of various types of non-transitory computer readable storage medium including magnetic media, optical media, random access memory (RAM), read only memory (ROM), etc. Computer 510 can comprise any type of computing device such as a network server, a desktop computer, a laptop, a handheld device, a mobile phone, a pager, a personal data assistant, etc.

Monitoring operational limits (e.g., OLL) and protecting gas turbines from identified failure modes (e.g., compressor stall) may begin with a non-transitory computer readable storage medium (e.g., memory 514, storage system 522, etc.) storing code 520 representative of protection system 530. Code 520 may be translated between different formats, converted into a set of data signals and transmitted, received as a set of data signals and converted to code, stored, etc., as necessary. Protection system 530 includes an operating limit 532 that provides the basis of the protection system, such as an OLL. Operating limit 532 may be a fixed value or a dependent value. For example OLL may be represented by a curve such that operating limit 532 varies based on speed corrected airflow. In other embodiments, operating limit 532 may be a multivariable value based on a variety of inputs and transfer functions. Protection system 530 also includes input value 534 that provides the current operational input against which the operating limit 532 may be evaluated, such as CPR. In some embodiments, input value 534 may be a single value that varies over time and may include either a direct signal value or be processed for correction, normalization, filtering, or a defined transfer function. In some embodiments, input value 534 may include a plurality of values representing different variables relevant to calculating the operating condition relative to operating limit 532. In the example shown, an offset 536 is also provided to enable protection system 530 to adjust the calculated difference between operating limit 532 and input value 534. In some embodiments, offset 536 may represent a safety margin based on accuracy, delay, variability, or other factors related to calculating operating limit 532 and detecting input value 534. Difference logic 538 calculates the present difference between input value 534 and operating limit 532 and difference logic 540 calculates the adjusted present difference from the present difference using offset 536. The resulting adjusted present difference may then be evaluated against a plurality of action thresholds 550, 552, 554, 556. For example, each of action thresholds 550, 552, 554, 556 may provide increasing threshold values at which various remedial actions are taken. For example, if the adjusted present difference is less than action threshold 550 (meaning input value 534 is closer to operating limit 536) then a first action 560 is initiated. If the adjusted present difference is less than action threshold 552, which is less than action threshold 550, then a second action 562 is initiated, and so on. Action thresholds 550, 552, 554, 556 may include 0 values (meaning input value 534 with offset 536 equals operating limit 532) or negative (meaning input value 534 with offset 536 exceeds operating limit 532, but may not yet have caused a failure or trip due to the margin provided by offset 536 or other factors). In the example shown, when action threshold 554 is met, shroud clearance control 564 is engaged and a shroud clearance control signal is provided to gas turbine system 502. When action threshold 556 is met, fuel control 566 is engaged and a fuel control signal is provided to gas turbine system 502. In some embodiments, action threshold 554 represents a lower input value than action threshold 556, such that shroud clearance control will be attempted before triggering fuel control. In the example shown, there are four action thresholds 550, 552, 554, 556 and four resulting actions. In other embodiments, any number of action thresholds and actions may be implemented, depending on the number of remedial actions available to gas turbine system 502. In some embodiments, the final action may be a trip to take gas turbine system 502 offline.

The foregoing drawings show some of the operational processing associated according to several embodiments of this disclosure. It should be noted that in some alternative implementations, the acts described may occur out of the order described or may in fact be executed substantially concurrently or in the reverse order, depending upon the act involved.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

Various aspects and embodiments of the present invention are defined by the following clauses:
1. A system comprising:
   a multi-stage turbine including:
      a stage of airfoils with a distal shroud;
      a casing adjacent the distal shroud and defining a clearance distance between the distal shroud and the casing;
      a clearance control mechanism that controllably adjusts the clearance distance based upon a clearance control signal; and
      a protection system providing the clearance control signal to the clearance control mechanism, wherein the protection system receives operational data related to the multi-stage turbine and modifies the clearance control signal based on an operational limit value related to a failure mode and the clearance control signal selectively increases the clearance distance to protect the system from the failure mode.
2. The system of clause 1, wherein the stage of airfoils with a distal shroud includes a first stage of the multi-stage turbine having a choked flow point constrained by the clearance distance.
3. The system of clause 1, further comprising a compressor operatively connected to the multi-stage turbine, and wherein the failure mode is compressor stall and the operational limit value is an operability limit line.
4. The system of clause 1, wherein the clearance control mechanism includes a blower that cools the casing adjacent the distal shroud during steady-state operation of the multi-stage turbine to reduce the clearance distance and the protection system modifies the clearance control signal to reduce the blower flow to increase the clearance distance.
5. The system of clause 1, wherein the clearance control mechanism is selected from a mechanical actuator, a hydraulic actuator, or a pneumatic actuator.
6. The system of clause 1, wherein the protection system comprises a plurality of action thresholds based on the operational limit value and provides a fuel source suppression signal to reduce energy flow through the multi-stage turbine, wherein the protection system modifies the clearance control signal to increase the clearance distance at a first action threshold and modifies the fuel source suppression signal at a second action threshold, where the first action threshold is lower than the second action threshold.
7. The system of clause 6, wherein the plurality of action thresholds further includes at least one action threshold that is lower than the first action threshold.
8. A method comprising:
   controlling operation of a multi-stage turbine including:
      a stage of airfoils with a distal shroud;
      a casing adjacent the distal shroud and defining a clearance distance between the distal shroud and the casing; and
      a clearance control mechanism that controllably adjusts the clearance distance based upon receiving a clearance control signal;
   providing the clearance control signal to operate the multi-stage turbine with a first clearance distance during steady-state operation based on operational data related to the multi-stage turbine and an operational limit value related to a failure mode of a system including the multi-stage turbine; and
   modifying the clearance control signal to operate the multi-stage turbine with a second clearance distance greater than the first clearance distance based on the operational limit value and a change in the operational data.
9. The method of clause 8, wherein the stage of airfoils with a distal shroud includes a first stage of the multi-stage turbine having a choked flow point constrained by the clearance distance.
10. The method of clause 8, further comprising a compressor operatively connected to the multi-stage turbine and wherein the failure mode is compressor stall and the operational limit value is an operability limit line.
11. The method of clause 8, wherein the clearance control mechanism is a blower that cools the casing adjacent the distal shroud during steady-state operation of the multi-stage turbine to maintain the first clearance distance and modifying the clearance control signal reduces the blower flow to increase the clearance distance to the second clearance distance.
12. The method of clause 8, wherein the clearance control mechanism is selected from a mechanical actuator, a hydraulic actuator, or a pneumatic actuator.
13. The method of clause 8, further comprising providing a fuel source suppression signal to reduce energy flow through the multi-stage turbine, wherein modifying the clearance control signal is triggered at a first action threshold based on the operational limit value and providing the fuel source suppression signal is triggered at a second action threshold based on the operational limit value, where the first action threshold is lower than the second action threshold.
14. The method of clause 8, further comprising taking a remedial action to reduce the likelihood of the failure mode at a third action threshold, wherein the third action threshold is lower than the first action threshold.
15. A non-transitory computer readable storage medium storing code representative of a control system for a multi-stage turbine, the multi-stage turbine including: a stage of airfoils with a distal shroud; a casing adjacent the distal shroud and defining a clearance distance between the distal shroud and the casing; and a clearance control mechanism that controllably adjusts the clearance distance based upon receiving a clearance control signal, comprising:
   a protection system with an operational limit value related to a failure mode and providing the clearance control signal to the clearance control mechanism, wherein the protection system receives operational data related to the multi-stage turbine and modifies the clearance control signal based on the operational limit value to increase the clearance distance.
16. The storage medium of clause 15, wherein the stage of airfoils with a distal shroud is a first stage of the multi-stage turbine having a choked flow point constrained by the clearance distance and the protection system further comprises providing a fuel source suppression signal to reduce energy flow through the multi-stage turbine based on the operational limit value.
17. The storage medium of clause 15, wherein the multi-stage turbine is operatively connected to a compressor and wherein the failure mode is compressor stall and the operational limit value is an operability limit line.
18. The storage medium of clause 15, wherein the clearance control mechanism is a blower that cools the casing adjacent the distal shroud during steady-state operation of the multi-stage turbine to maintain a first clearance distance and the protection system modifies the clearance control signal to reduce the blower flow to increase the clearance distance to a second clearance distance.
19. The storage medium of clause 15, wherein the protection system comprises a plurality of action thresholds based on the operational limit value and provides a fuel source suppression signal to reduce energy flow through the multi-stage turbine, wherein the protection system modifies the clearance control signal to increase the clearance distance at a first action threshold and modifies the fuel source suppression signal at a second action threshold, where the first action threshold is lower than the second action threshold.
20. The storage medium of clause 19, wherein the plurality of action thresholds further includes at least one action threshold that is lower than the first action threshold.

## Claims

1. A system (100, 300) comprising:
a multi-stage (1) turbine (200, 400, 502) including:
a stage (1) of airfoils with a distal shroud;
a casing adjacent the distal shroud and defining a clearance distance between the distal shroud and the casing;
a clearance control mechanism (138, 238, 338, 438) that controllably adjusts the clearance distance based upon a clearance control signal (224, 324, 424); and
a protection system (120, 220, 320, 420, 530) providing the clearance control signal (224, 324, 424)to the clearance control mechanism (138, 238, 338, 438), wherein the protection system (120, 220, 320, 420, 530) receives operational data related to the multi-stage (1) turbine (200, 400, 502) and modifies the clearance control signal (224, 324, 424)based on an operational limit value related to a failure mode and the clearance control signal (224, 324, 424) selectively increases the clearance distance to protect the system (100) from the failure mode.

2. The system (100) of claim 1, wherein the stage (1) of airfoils with a distal shroud includes a first stage (1) of the multi-stage (1) turbine (200, 400, 502) having a choked flow point constrained by the clearance distance.

3. The system (100) of claim 1 or claim 2, further comprising a compressor (132, 232, 332, 432) operatively connected to the multi-stage (1) turbine (200, 400, 502), and wherein the failure mode is compressor (132, 232, 332, 432) stall and the operational limit value is an operability limit line.

4. The system (100) of any preceding claim, wherein the clearance control mechanism (138, 238, 338, 438) includes a blower (340, 440) that cools the casing adjacent the distal shroud during steady-state operation of the multi-stage (1) turbine (200, 400, 502) to reduce the clearance distance and the protection system (120, 220, 320, 420, 530) modifies the clearance control signal (224, 324, 424) to reduce the blower (340, 440) flow to increase the clearance distance.

5. The system (100) of any preceding claim, wherein the clearance control mechanism (138, 238, 338, 438) is selected from a mechanical actuator, a hydraulic actuator, or a pneumatic actuator.

6. The system (100) of any preceding claim, wherein the protection system (120, 220, 320, 420, 530) comprises a plurality of action thresholds (550, 552, 554, 556) based on the operational limit value and provides a fuel source suppression signal to reduce energy flow through the multi-stage (1) turbine (200, 400, 502), wherein the protection system (120, 220, 320, 420, 530) modifies the clearance control signal (224, 324, 424) to increase the clearance distance at a first action threshold (550, 552, 554, 556) and modifies the fuel source suppression signal at a second action threshold (550, 552, 554, 556), where the first action threshold (550, 552, 554, 556) is lower than the second action threshold (550, 552, 554, 556).

7. The system (100) of claim 6, wherein the plurality of action thresholds (550, 552, 554, 556) further includes at least one action threshold (550, 552, 554, 556) that is lower than the first action threshold (550, 552, 554, 556).

8. A method comprising:
controlling operation of a multi-stage (1) turbine (200, 400, 502) including:
a stage (1) of airfoils with a distal shroud;
a casing adjacent the distal shroud and defining a clearance distance between the distal shroud and the casing; and
a clearance control mechanism (138, 238, 338, 438) that controllably adjusts the clearance distance based upon receiving a clearance control signal (224, 324, 424);
providing the clearance control signal (224, 324, 424) to operate the multi-stage (1) turbine (200, 400, 502) with a first clearance distance during steady-state operation based on operational data related to the multi-stage (1) turbine (200, 400, 502) and an operational limit value related to a failure mode of a system (100) including the multi-stage (1) turbine (200, 400, 502); and
modifying the clearance control signal (224, 324, 424) to operate the multi-stage (1) turbine (200, 400, 502) with a second clearance distance greater than the first clearance distance based on the operational limit value and a change in the operational data.

9. The method of claim 8, wherein the stage (1) of airfoils with a distal shroud includes a first stage (1) of the multi-stage (1) turbine (200, 400, 502) having a choked flow point constrained by the clearance distance.

10. The method of claim 8 or claim 9, further comprising a compressor (132, 232, 332, 432) operatively connected to the multi-stage (1) turbine (200, 400, 502) and wherein the failure mode is compressor (132, 232, 332, 432) stall and the operational limit value is an operability limit line.

11. The method of any of claims 8 to 10, wherein the clearance control mechanism (138, 238, 338, 438) is a blower (340, 440) that cools the casing adjacent the distal shroud during steady-state operation of the multi-stage (1) turbine (200, 400, 502) to maintain the first clearance distance and modifying the clearance control signal (224, 324, 424) reduces the blower (340, 440) flow to increase the clearance distance to the second clearance distance.

12. The method of any of claims 8 to 11, wherein the clearance control mechanism (138, 238, 338, 438) is selected from a mechanical actuator, a hydraulic actuator, or a pneumatic actuator.

13. The method of any of claims 8 to 12, further comprising providing a fuel source suppression signal to reduce energy flow through the multi-stage (1) turbine (200, 400, 502), wherein modifying the clearance control signal (224, 324, 424) is triggered at a first action threshold (550, 552, 554, 556) based on the operational limit value and providing the fuel source suppression signal is triggered at a second action threshold (550, 552, 554, 556) based on the operational limit value, where the first action threshold (550, 552, 554, 556) is lower than the second action threshold (550, 552, 554, 556).

14. The method of any of claims 8 to 13, further comprising taking a remedial action to reduce the likelihood of the failure mode at a third action threshold (550, 552, 554, 556), wherein the third action threshold (550, 552, 554, 556) is lower than the first action threshold (550, 552, 554, 556).

15. A non-transitory computer readable storage medium (512) storing code (520) representative of a control system (110, 210, 310, 410, 500) for a multi-stage turbine (200, 400, 502), the multi-stage turbine (200, 400, 502) including: a stage of airfoils with a distal shroud; a casing adjacent the distal shroud and defining a clearance distance between the distal shroud and the casing; and a clearance control mechanism (138, 238, 338, 438) that controllably adjusts the clearance distance based upon receiving a clearance control signal (224, 324, 424), comprising:
a protection system (120, 220, 320, 420, 530) with an operational limit value related to a failure mode and providing the clearance control signal (224, 324, 424) to the clearance control mechanism (138, 238, 338, 438), wherein the protection system (120, 220, 320, 420, 530) receives operational data related to the multi-stage turbine (200, 400, 502) and modifies the clearance control signal (224, 324, 424) based on the operational limit value to increase the clearance distance.
